# EUROPÄISCHE PATENTSCHRIFT

(11) **EP 2 531 747 B1**
(45) Veröffentlichungstag und Bekanntmachung des Hinweises auf die Patenterteilung: **17.06.2015**
(21) Anmeldenummer: 11706154.9
(22) Anmeldetag: 04.02.2011
(51) Int. Cl.: F16H 3/42, F16H 63/04

(54) **SCHALTGETRIEBE**
CHANGE-SPEED GEARBOX
BOÎTE DE VITESSES

(30) Priorität: 04.02.2010 DE 202010001876 U
(43) Veröffentlichungstag der Anmeldung: 12.12.2012
(73) Patentinhaber: Richter Feinwerktechnik, 96185 Schönbrunn / Steigerwald (DE)
(72) Erfinder: RICHTER, Helmut, 96185 Schönbrunn (DE)
(74) Vertreter: Kossak, Sabine
(86) Internationale Anmeldenummer: PCT/EP2011/000524
(87) Internationale Veröffentlichungsnummer: WO 2011/095348

(56) Entgegenhaltungen:
- EP-A2- 1 741 956
- DE-A1- 19 512 642
- US-A- 4 680 985
- US-A1- 2009 056 486

## Beschreibung

### TECHNISCHES GEBIET

Die Erfindung betrifft ein Schaltgetriebe, das zwischen mindestens zwei Schaltstufen umschaltbar ist.

### HINTERGRUND DER ERFINDUNG

Im Stand der Technik sind seit langer Zeit Schaltgetriebe zur Verwendung in Fahrzeugen, Werkzeugmaschinen und Vorrichtungen aus vielen technischen Gebieten hinlänglich bekannt. Besonders verbreitet sind Zahnrad-Schaltgetriebe, die im Folgenden im Zuge der Beschreibung der Erfindung näher berücksichtigt werden.

In Schaltgetrieben können Drehzahl und Drehmoment in Stufen durch Wechseln von Übersetzungsverhältnissen zwischen Zahnrädern geschaltet werden. Diese Funktion könnte auch in einer Drehrichtungsumkehr in Form eines Rückwärtsgangs liegen. Bei Stirnradgetrieben sind eine Antriebs- und eine Abtriebswelle parallel zueinander angeordnet. Relativ einfache derartige Schaltgetriebe für Werkzeugmaschinen weisen mindestens eine Antriebsanordnung und eine Abtriebsanordnung auf, an denen Arbeitsräder in Form von Stirnrädern angeordnet sein könnten, wobei die Antriebsanordnung und die Abtriebsanordnung derart zueinander verschoben werden können, dass mindestens zwei unterschiedliche Paarungen von Arbeitsrädern herstellbar sind, die in Abhängigkeit von dem Durchmesser- und damit Zähnezahl-Verhältnis unterschiedliche Übersetzungen liefern.

Bei derartigen einfachen Schaltgetrieben ist erforderlich, ein das Schaltgetriebe beinhaltendes System vollständig abzubremsen und anzuhalten, so dass ohne Beschädigung der Arbeitsräder bei relativ zueinander bewegten Zähnen das Übersetzungsverhältnis durch eine Relativverschiebung der Antriebsanordnung und der Abtriebsanordnung geändert werden kann.

Es gibt deshalb Bestrebungen, Getriebe stufenlos auszugestalten, um ein Abbremsen und Anhalten des Systems vermeiden zu können. Ein solches stufenloses Getriebe ist aus der gattungsgemäßen US 4,680,985 B bekannt. Das stufenlose Getriebe weist ein Hohlrad auf, das axial verschiebbar ist. Auf einer zweiten Welle ist ein Kegel angeordnet, der in das Hohlrad eingreift. Durch Variationen der axialen Position des Hohlrades im Verhältnis zum Kegel kann die Drehzahl der Antriebswelle, die mit dem Hohlrad verbunden ist, entsprechend variiert werden.

### ZUSAMMENFASSUNG DER ERFINDUNG

Zum Umschalten einer Geschwindigkeit einer Abtriebsanordnung ist es als nachteilig anzusehen, das das Schaltgetriebe beinhaltende System anzuhalten, da die an der Abtriebsanordnung angekoppelten angetriebenen trägen Massen abgebremst und nach dem Schaltvorgang wieder beschleunigt werden müssen. Besonders bei Werkzeugmaschinen, zum Beispiel eine Dreh- oder Fräsmaschine, bedeutet dies gleichermaßen eine Verringerung der Effektivität und damit der Produktivität sowie im Gegenzug eine Erhöhung der spezifischen Kosten eines auf der betreffenden Werkzeugmaschine hergestellte Produkts.

Es könnte dementsprechend als eine Aufgabe der Erfindung angesehen werden, ein Schaltgetriebe vorzuschlagen, das die oben genannten Nachteile nicht oder nur in einem geringen Maß aufweist.

Eine weitere Aufgabe der Erfindung könnte darin liegen, ein derartiges Schaltgetriebe vorzuschlagen, das im Vergleich zu üblichen Schaltgetrieben keine oder nur in einem sehr geringen Maß erhöhte Komplexität aufweist.

Die vorangehend genannten Aufgaben werden durch ein Schaltgetriebe mit den Merkmalen des unabhängigen Schutzanspruchs 1 gelöst. Vorteilhafte Weiterbildungen sind den Unteransprüchen zu entnehmen.

Gemäß einer ersten Ausführung weist ein erfindungsgemäßes Schaltgetriebe die Merkmale des Anspruchs 1.

Die Antriebsanordnung des erfindungsgemäßen Schaltgetriebes muss nicht zwangsläufig nur ein erstes und ein zweites Arbeitsrad aufweisen, sondern es können auch mehrere zusätzliche Arbeitsräder vorhanden sein. Um die Funktion eines Schaltgetriebes erfüllen zu können, das heißt um verschiedene Übersetzungsverhältnisse vorzugeben, sind je nach gewünschtem Übersetzungsverhältnis ein Arbeitsrad an der Antriebsanordnung und ein damit korrespondierendes Arbeitsrad an der Abtriebsanordnung vonnöten. In dem erfindungsgemäßen Schaltgetriebe liegt jedoch gemäß einem ersten Aspekt der Erfindung lediglich ein einziges drittes Arbeitsrad an der Abtriebsanordnung vor, das sowohl mit dem ersten Arbeitsrad als auch mit dem zweiten Arbeitsrad an der Antriebsanordnung in Eingriff gebracht werden kann. Lägen weitere Arbeitsräder an der Antriebsanordnung vor, könnte das dritte Arbeitsrad auch mit diesen zusätzlichen Arbeitsrädern in Eingriff gebracht werden. Dies ist dadurch möglich, dass das dritte Arbeitsrad parallel zu einer Längsachse der Antriebsanordnung verschiebbar und mit dem jeweiligen Arbeitsrad der Antriebsanordnung in Eingriff gebracht werden kann. Dies setzt implizit auch eine Verschiebung des dritten Arbeitsrads senkrecht zu der Längsachse der Antriebsanordnung voraus, da bei idealerweise gleich bleibendem Modul der Arbeitsräder und gleichbleibender Zahnhöhe ein ausreichender Abstand zwischen den in Eingriff stehenden Arbeitsrädern erforderlich ist.

Das erfindungsgemäße Schaltgetriebe kann die vorangehend genannten Aufgaben lösen, ohne das Abschalten des das erfindungsgemäße Schaltgetriebe aufweisenden Systems zu erfordern. Dies ist durch das zwischen dem ersten Arbeitsrad und dem zweiten Arbeitsrad angeordnete erste Schaltrad, das auf zu den jeweiligen Arbeitsrädern gewandten Seiten unterschiedliche Zähnezahlen aufweist. Dafür ist erforderlich, dass ein oder mehrere sogenannte Differenzzähne in den Grund des ersten Schaltrads laufen, wobei die Anzahl der Differenzzähne der Differenz zwischen der Zähnezahl des ersten Arbeitsrads und des zweiten Arbeitsrads entspricht. Der Begriff "in den Grund laufen" steht für eine Verringerung der jeweiligen Zahnhöhe auf Null.

Bei einer Schaltbewegung, das heißt bei einer Verschiebung des dritten Arbeitsrads von einer ersten Schaltposition, bei dem das erste Schaltrad im Eingriff mit dem ersten Arbeitsrad steht in eine zweiten Schaltposition, in der das dritte Arbeitsrad mit dem zweiten Arbeitsrad in Eingriff steht, verläuft das dritte Arbeitsrad in oder entlang der Verzahnung des ersten Schaltrads. Dreht sich die Antriebsanordnung mit einer vorgegebenen Antriebsgeschwindigkeit, das heißt das erste Arbeitsrad, das zweite Arbeitsrad und das erste Schaltrad drehen sich mit einer gleichmäßigen, identischen Winkelgeschwindigkeit, erhöht oder senkt das dritte Arbeitsrad je nach Schaltrichtung seine Drehzahl kontinuierlich zwischen den beiden Schaltpositionen, wobei am Ende der Schaltbewegungen das dritte Arbeitsrad entweder mit dem ersten Arbeitsrad oder mit dem zweiten Arbeitsrad in Eingriff steht, um dort ein Drehmoment zu übertragen.

Erfolgt die Schaltbewegung zwischen den möglichen Schaltpositionen mit einer ausreichend großen Geschwindigkeit, kann im Bereich des ersten Schaltrads ein Schaltkonflikt zwischen dem dritten Arbeitsrad und dem ersten Schaltrad nicht oder annähernd nicht entstehen. Derartige Schaltkonflikte könnten beim Übergang von der ersten Schaltposition mit einem ersten Arbeitsrad mit einer ersten Zähnezahl in eine zweite Schaltposition mit einem zweiten Arbeitsrad mit einer zweiten Zähnezahl, die höher ist als die erste Zähnezahl ist, hinsichtlich der Materialbelastung etwas problematischer sein, was sich jedoch durch die entsprechende Schaltgeschwindigkeit beheben lässt.

Durch ein derartiges Schaltgetriebe wird eine mechanisch einfache Möglichkeit vorgeschlagen, mit der ein zuverlässiges Schalten zwischen mindestens zwei Schaltpositionen ermöglicht wird, ohne jedoch die Antriebsanordnung vor dem Schaltvorgang abbremsen zu müssen.

An dieser Stelle sei darauf hingewiesen, dass sich der Gegenstand der Erfindung nicht darauf beschränkt, lediglich zwei Schaltpositionen vorzugeben. Vielmehr könnte die Antriebsanordnung gemäß einem weiteren Aspekt der vorliegenden Erfindung auch ein viertes Arbeitsrad, ein fünftes Arbeitsrad, ein sechstes Arbeitsrad usw. aufweisen, wobei zwischen zwei benachbarten Arbeitsrädem, beispielsweise einem zweiten Arbeitsrad und einem vierten Arbeitsrad, einem vierten Arbeitsrad und einem fünften Arbeitsrad, einem fünften Arbeitsrad und einem sechsten Arbeitsrad usw. ein weiteres Schaltrad mit ähnlichen technischen Merkmalen angeordnet ist wie die des ersten Schaltrads. Dadurch kann ein Schaltgetriebe bereitgestellt werden, das theoretisch eine beliebige Anzahl von Schaltpositionen aufweisen könnte, wobei beim Umschalten kein Abbremsen der Antriebsanordnung notwendig ist.

An dieser Stelle sei auch darauf hingewiesen, dass sich der Gegenstand der Erfindung nicht darauf beschränkt, stets eine sich drehende Antriebsanordnung zu fordern. Ein wesentlicher Vorteil gegenüber bekannten Schaltgetrieben aus dem Stand der Technik ist die Tatsache, dass das erfindungsgemäße Schaltgetriebe zusätzlich auch dazu geeignet ist, im Stillstand geschaltet zu werden.

Gemäß einer weiteren vorteilhaften Ausführungsform ist jeder zweite Zahn auf der zweiten Seite des ersten Schaltrads als ein Differenzzahn ausgeführt. Ein derartiges aufgebautes erfindungsgemäßes Schaltgetriebe könnte fertigungstechnisch leichter herzustellen sein als erste Schalträder mit einer anderen Zahnzahldifferenz. Es sei hier jedoch ausdrücklich darauf hingewiesen, dass dies lediglich eine von vielen möglichen Ausführungsformen darstellt.

Gemäß einer weiteren vorteilhaften Ausführungsform weist ein erfindungsgemäßes Schaltgetriebe ein mit dem ersten Schaltrad in Eingriff bringbares zweites Schaltrad auf, das bündig an dem dritten Arbeitsrad angeordnet ist. Das zusätzliche zweite Schaltrad ist besonders vorteilhaft, um die Drehzahl des dritten Arbeitsrads bei jedem Schaltvorgang kontinuierlich zu erhöhen, da ein besserer Eingriff in das erste Schaltrad realisierbar ist.

Gemäß einer weiteren vorteilhaften Ausführungsform ist das zweite Schaltrad als Kegelzahnrad ausgeführt. Da das dritte Arbeitsrad dazu eingerichtet ist, mit dem ersten Arbeitsrad und dem zweiten Arbeitsrad und allen weiteren Arbeitsrädern ideal im Eingriff zu stehen, ist ein zweites Schaltrad als Kegelzahnrad besonders gut dazu geeignet, eine Drehzahlerhöhung durch Eingriff mit dem ersten Schaltrad zu erlauben.

Besonders bevorzugt ist mindestens ein Zahn des zweiten Schaltrads elastisch gelagert. Durch die elastische Lagerung mindestens eines Zahns und bevorzugt mehrerer Zähne des zweiten Schaltrads ist ein kinematisch leichterer Übergang von einer niedrigen Zähnezahl zu einer höheren Zähnezahl oder umgekehrt möglich. Unstetigkeiten beim Eingriff in durchlaufende Zähne des ersten Schaltrads und in den Grund des ersten Schaltrads verlaufender Differenzzähne können durch die elastische Lagerung einfacher ausgeglichen werden als bei ausschließlicher Verwendung von starren Zähnen. Eine elastische Lagerung könnte durch einen unterhalb des betreffenden Zahns befindlichen Federmechanismus realisiert sein. Alternativ oder zusätzlich dazu könnte sich zwischen dem betreffenden Zahn und dem Grund des zweiten Schaltrads auch ein elastisches Material, wie ein Elastomer oder ein offenporiger Schaumstoff wie Moosgummi, befinden, das eine gewisse Relativbewegung zwischen dem betreffenden Zahn und dem Grund zulässt.

Besonders günstig weist auch ein als Kegelrad ausgeführtes zweites Schaltrad einen oder mehrere Differenzzähne auf, die von einer zu dem dritten Arbeitsrad gewandten Seite zu einer gegenüberliegenden Seite des zweiten Schaltrads in den Grund des zweiten Schaltrads verlaufen.

Gemäß einer weiteren vorteilhaften Ausführungsform weist das als Kegelrad ausgeführte zweite Schaltrad mindestens einen bevorzugt genau zwei Differenzzähne auf. So weist z.B. ein Zahnrad mit insgesamt neun Zähnen sieben vollständige und zwei Differenzzähne auf. Ebenso kann das zweite Schaltrad abwechselnd einen Differenzzahn, der in den Grund läuft, neben zwei Zähnen des Schaltrades, die mit normaler Zahnhöhe über die gesamte Länge des Kegelrades verlaufen aufweisen. Es ergibt sich somit ein Muster von abwechselnd zwei Zähnen mit normaler Zahnhöhe, einem auf Grund laufenden Differenzzahn, zwei normalen Zähnen, einem auf Grund laufenden Zahn usw. Entsprechend ist jeder dritte Zahn als Differenzzahn ausgeführt. Das Kegelrad gemäß dieser Ausführungsform weist bevorzugt keine Überfederung der Zähne auf. Durch die beiden vollständigen Zähne erfolgt auch beim Schalten jeweils eine Führung des zweiten Schaltrades, so dass beim Schalten keine Konfliktsituationen zwischen den Zähnen des ersten Schaltrades und des zweiten Schaltrades auftreten. Mögliche Konflikte beim Schalten auf das größere Schaltrad werden durch den Differenzahn vermieden.

Besonders vorteilhaft könnte das zweite Schaltrad auch als konischer Wälzkörper aus einem elastischen Material ausgeführt sein. Durch Verwendung eines elastischen Materials ist eine besonders leichte Anpassung an das erste Schaltrad ermöglicht, da keine harten Eingriffsflanken mit definierter Eingriffskinematik vorliegen, sondern sich das elastische Material bei dem Übergang zwischen zwei Schaltpositionen besser an unterschiedliche Zähnezahlen anpassen kann.

Gemäß einer vorteilhaften Ausführungsform ist das elastische Material des zweiten Schaltrads ein offenzelliger Schaumstoff, beispielsweise ein Moosgummi oder dergleichen. Ein derartiges Material ist besonders gut dazu geeignet, sich elastisch in die Zahnlücken des ersten Schaltrads einzufügen.

An dieser Stelle sei darauf hingewiesen, dass bei erfindungsgemäßen Schaltgetrieben, die zum Übertragen von höheren Drehmomenten eingesetzt werden, zweite Schalträder mit einer Verzahnung eingesetzt werden sollten, wohingegen bei erfindungsgemäßen Schaltgetrieben, die lediglich zum Übertragen geringerer Drehmomente eingesetzt werden, vorteilhafter Elastomere, offenzellige Schaumstoffe oder dergleichen eingesetzt werden könnten.

Gemäß einer vorteilhaften Ausführungsform kann das dritte Arbeitsrad so gewählt werden, dass die Zähne nachgiebig sind. Die Zähne des dritten Arbeitsrades können dann beim Schalten federn, um einer Konfliktsituation auszuweichen. Bei dieser Ausführungsform wird bevorzugt kein zweites Schaltrad eingesetzt.

Gemäß einer vorteilhaften Weiterbildung weist das erfindungsgemäße Schaltgetriebe ferner einen Rahmen auf, wobei die mindestens eine Antriebsanordnung antreibbar an dem Rahmen gelagert ist und die mindestens eine Abtriebsanordnung drehbar und verschiebbar an dem Rahmen gelagert ist. Bevorzugt ist die Schaltvorrichtung an dem Rahmen angeordnet. Die Lagerung der Antriebsanordnung und der Abtriebsanordnung an dem Rahmen ermöglicht die Konzeption des erfindungsgemäßen Schaltgetriebes als eine Baueinheit, wobei die Schaltvorrichtung auch an dem Rahmen angeordnet sein könnte, um eine definierte Kinematik zu der Abtriebsanordnung und der Antriebsanordnung herzustellen.

Gemäß einer vorteilhaften Ausführungsform ist die Abtriebsanordnung an einem ersten Ende eines parallel zur Längsachse der Antriebsanordnung verschiebbar an dem Rahmen geführten Hebels drehbar gelagert. Durch den Hebel kann eine definierte Verschiebung parallel zu einer Längsachse der Antriebsanordnung durchgeführt werden, wobei durch eine Kippbewegung des Hebels auch eine Verschiebung der Abtriebsanordnung senkrecht zur Längsachse der Antriebsanordnung ermöglicht wird.

Gemäß einer weiteren vorteilhaften Ausführungsform ist ein zweites Ende des Hebels in einer an dem Rahmen angeordneten Führungsvorrichtung geführt. Durch die Führungsvorrichtung könnte eine definierte Kippbewegung des Hebels vorgegeben werden, entlang der Bewegung des Hebels und damit der Abtriebsanordnung während der Bewegung parallel zu der Längsachse der Antriebsanordnung.

Gemäß einer vorteilhaften Ausführungsform ist die Führungsvorrichtung als eine in dem Rahmen angeordnete Leitkurve ausgeführt und der Hebel ist an einem zwischen dem ersten Ende und dem zweiten Ende des Hebels angeordneten Punkt verschiebbar an einer an dem Rahmen angeordneten Achse gelagert. Die Leitkurve ist dazu eingerichtet, zwischen der Abtriebsvorrichtung und der Antriebsvorrichtung einen vordefinierten Abstand zum Herstellen eines idealen Eingriffs zwischen dem dritten Arbeitsrad und dem ersten oder zweiten Arbeitsrad zu gewährleisten. Dadurch kann stets Schaltkonflikten vorgebeugt werden und die Haltbarkeit des dritten Arbeitsrads wird gesteigert. Die Leitkurve kann dabei sowohl in Form eines an dem Rahmen befestigten Leitblechs realisiert sein, welches mit einem der Abtriebsanordnung entgegengesetzten Ende des Hebels in Eingriff steht und bei einer Relativbewegung des Hebels zu dem Rahmen ein Kippen des Hebels bewirkt. Andererseits könnte die Leitkurve in Form von gekrümmten Nuten an der zum Lagern des Hebels eingesetzten Achse vorgesehen werden, die mit einer an dem Rahmen angeordneten Feder oder dergleichen in Eingriff steht.

Bei einer vorteilhaften Weiterbildung des erfindungsgemäßen Schaltgetriebes weist die Schaltvorrichtung einen Federmechanismus mit Sperrschaltung auf, der dazu eingerichtet ist, die Abtriebsvorrichtung federkraftgestützt von der ersten Schaltposition in die zweite Schaltposition zu bringen. Zur Erhöhung der Schaltgeschwindigkeit kann eine entsprechend ausgelegte Feder des Federmechanismus vorgespannt werden und mittels der Sperrschaltung die Abtriebsanordnung sehr rasch von einer ersten Schaltposition in eine zweite Schaltposition oder umgekehrt verschoben werden. Die Schaltbewegung, das heißt die Bewegung der Abtriebsanordnung zwischen zwei Schaltpositionen, erfolgt nicht linear mit einer relativ langsamen Schaltbewegung am Anfang, einer sehr raschen Schaltbewegung im Mittelbereich und bei Erreichen der gewünschten Schaltposition einer langsameren Schaltbewegung.

Gemäß einer Ausführungsform des Federmechanismus mit Sperrschaltung wird für die Sperrschaltung ein Elektrozylinder verwendet. Dieses erlaubt eine sehr schnelle Schaltbewegung zwischen zwei Schaltpositionen, sowie eine Ansteuerung der Sperrschaltung über elektrisches Signal. Besonders bevorzugt wird ein Elektrozylinder für eine Sperrschaltung eingesetzt, wenn das erfindungsgemäße Schaltgetriebe als mehrgängiges Getriebe ausgebildet ist.

Neben einem Federmechanismus mit Sperrschaltung können auch andere Ausführungsformen realisiert werden, beispielsweise über einen pneumatischen, hydraulischen oder elektrischen Zylinder sowie durch eine Exzenterscheibe oder ähnlichen Vorrichtungen.

Gemäß einer vorteilhaften Ausführungsform weist die mindestens eine Antriebsvorrichtung eine Antriebswelle auf, die einen nicht kreisrunden Querschnitt aufweist, auf dem das erste Arbeitsrad, das zweite Arbeitsrad und das Schaltrad mit einem korrespondierend geformten Öffnungsquerschnitt formschlüssig angeordnet sind. Dadurch ist es nicht erforderlich, das erste Schaltrad mechanisch mit dem ersten Arbeitsrad und dem zweiten Arbeitsrad zu koppeln, sondern ein einfaches Aufschieben und Fixieren an der Antriebswelle erhöht die Austauschbarkeit der einzelnen Komponenten der Antriebsanordnung. Dies führt weiterhin zu einer leichteren Integration in bereits bestehende Getriebe, indem mehrere Arbeitsräder voneinander beabstandet in einer Antriebsanordnung positioniert sind.

Gemäß einer vorteilhaften Ausführungsform weist auch die Abtriebsvorrichtung eine Abtriebswelle auf, die einen nicht kreisrunden Querschnitt besitzt, auf dem das dritte Arbeitsrad mit einem korrespondierend geformten Öffnungsquerschnitt formschlüssig angeordnet ist. Die vorgenannten Vorteile des ähnlichen Merkmals mit Bezug auf die Antriebsanordnung gelten analog auch für die Abtriebsanordnung.

### KURZE BESCHREIBUNG DER ZEICHNUNGEN

Weitere Merkmale, Vorteile und Anwendungsmöglichkeiten der vorliegenden Erfindung ergeben sich aus der nachfolgenden Beschreibung des Ausführungsbeispiels und den Figuren. Dabei bilden alle beschriebenen und/oder bildlich dargestellten Merkmale für sich und in jeder Kombination den Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte.
Fig. 1a, 1b und 1c zeigen das erfindungsgemäße Schaltgetriebe in zwei unterschiedlichen isometrischen Ansichten sowie in einer Draufsicht, wobei sich das erfindungsgemäße Schaltgetriebe in der ersten Schaltposition befindet.
Fig. 2a, 2b und 2c zeigen das erfindungsgemäße Schaltgetriebe in zwei unterschiedlichen isometrischen Ansichten sowie in einer Draufsicht, wobei sich das erfindungsgemäße Schaltgetriebe in der zweiten Schaltposition befindet.
Fig. 3 und 4 zeigen das dritte Arbeitsrad und das zweite Schaltrad in einer isometrischen Ansicht.
Fig. 5a und 5b zeigen schematisch Zahnräder mit bewegbaren Zähnen.
Fig. 5c und 5d zeigen eine alternative Ausführungsform des zweiten Schaltrads in einer isometrischen Ansicht.
Fig. 6 zeigt ein weiteres Ausführungsbeispiel eines erfindungsgemäßen Schaltgetriebes in einer isometrischen Ansicht.

### DETAILLIERTE BESCHREIBUNG EXEMPLARISCHER AUSFÜHRUNGSBEISPIELE

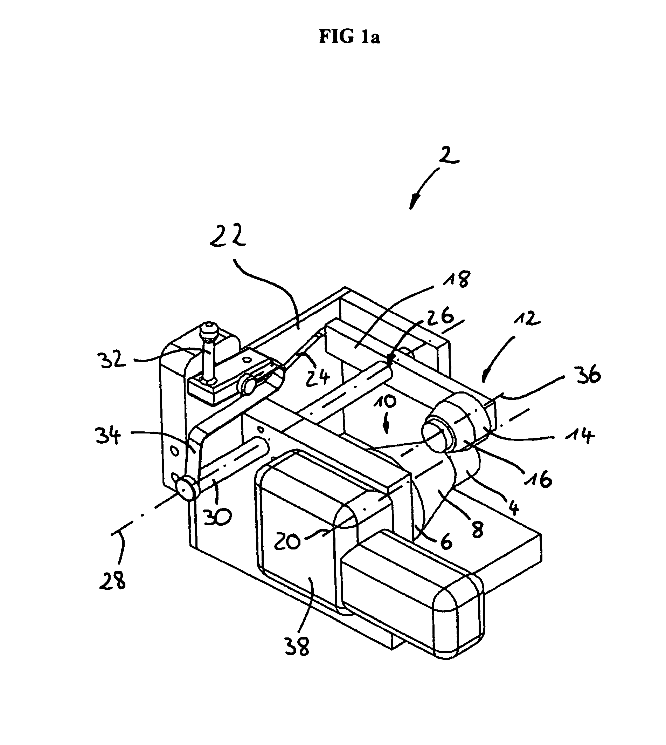

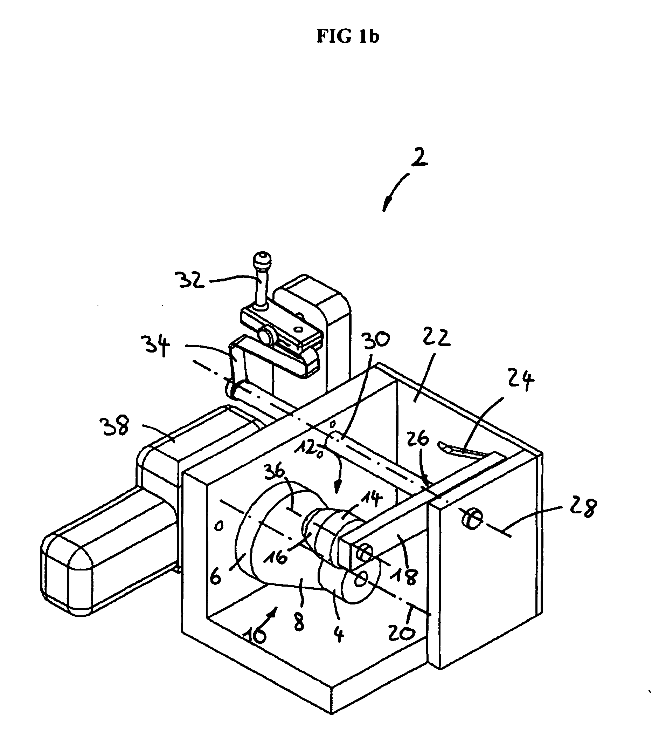

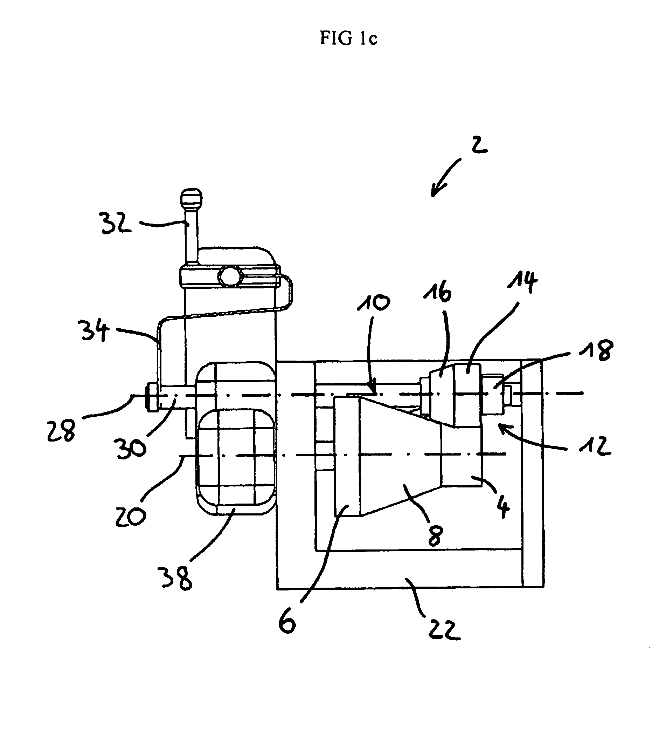

In den Fig. 1a, 1b und 1c wird ein erfindungsgemäßes Schaltgetriebe 2 mit einem ersten Arbeitsrad 4, einem zweiten Arbeitsrad 6 und einem ersten Schaltrad 8 gezeigt, die die Antriebsanordnung 10 bilden. Eine Abtriebsanordnung 12 weist ein drittes Arbeitsrad 14 und ein zweites Schaltrad 16 auf.

In der gezeigten Darstellung ist die erste Schaltposition erreicht, bei der das erste Arbeitsrad 4 und das dritte Arbeitsrad 14 im Eingriff stehen. Die Abtriebsanordnung 12 ist drehbar an einem Ende eines Hebels 18 gelagert, der parallel zu einer Längsachse 20 der Antriebsanordnung 10 verschiebbar an einem Rahmen 22 gelagert ist. Durch Verschieben des Hebels 18 parallel zu der Längsachse 20 der Antriebsanordnung 10 wird die Abtriebsanordnung 12 ebenfalls parallel zu der Längsachse 20 der Antriebsanordnung 10 verschoben, so dass das dritte Arbeitsrad 14 sowie das zweite Schaltrad 16 über das erste Schaltrad 8 zu dem zweiten Arbeitsrad 6 gelangen.

Das der Abtriebsanordnung 12 entgegengesetzte Ende des Hebels 18 ist in einer als Leitkurve 24 ausgeführten Führungsvorrichtung geführt, die als eine Ausnehmung mit einer vorbestimmten Krümmung oder anderen geometrischen Parametern in dem Rahmen 22 eingebracht ist. Zwischen den beiden Enden des Hebels 18 ist ein Lagerpunkt 26 positioniert, der in dem gezeigten Ausführungsbeispiel als eine Öffnung ausgeführt ist, die ein Verschwenken des Hebels 18 um die Längsachse 28 einer verschiebbar an dem Rahmen gelagerten Achse 30 erlaubt. Durch eine Translationsbewegung der Achse 30 wird der Lagerpunkt 26 des Hebels parallel zu der Längesachse der Achse 30 verschoben, so dass der Hebel mit einem Ende die Leitkurve 24 abfährt und dadurch die Abtriebsanordnung 12 in einem durch die Leitkurve 24 bestimmten Abstand zur Antriebsanordnung 10 geführt wird.

Bei der Schaltbewegung zu dem zweiten Arbeitsrad 6 hin wird die Drehzahl des dritten Arbeitsrads 14 durch den Eingriff des dritten Arbeitsrads 14 und des zweiten Schaltrads 16 mit dem ersten Schaltrad 8 kontinuierlich erhöht, bis die Drehzahl des dritten Arbeitsrads 14 auf die Drehzahl des zweiten Arbeitsrads 6 angepasst ist.

Die Translation der Achse 30 kann durch einen Schalthebel 32 initiiert werden, der über eine Feder 34 mit der Achse 30 verbunden ist. Hierzu wird der Schalthebel 32 beispielsweise um 90° im Uhrzeigersinn gekippt, so dass die Feder 34 gespannt wird und dann die Achse 30 in die zweite Schaltposition schnellen lässt.

Der Antrieb des Schalthebels 32 kann über beliebige Aktuatoren realisiert werden, auf pneumatischer, hydraulischer, elektrischer oder auf jede beliebige andere Art und Weise erfolgen. Der Antrieb der Antriebsanordnung 10 kann über eine Antriebseinheit 38 realisiert werden, die in dem vorliegenden Ausführungsbeispiel als Elektromotor dargestellt ist, der beispielsweise als Drehstrommotor ausgeführt ist, der über einen Frequenzumformer drehzahlvariabel ist. Alternativ dazu kämen sämtliche industriell verfügbaren oder zukünftig nutzbaren Antriebseinheiten 38 in Betracht, die dazu in der Lage sind, ein Drehmoment und eine ausreichende Drehzahl aufzubringen.

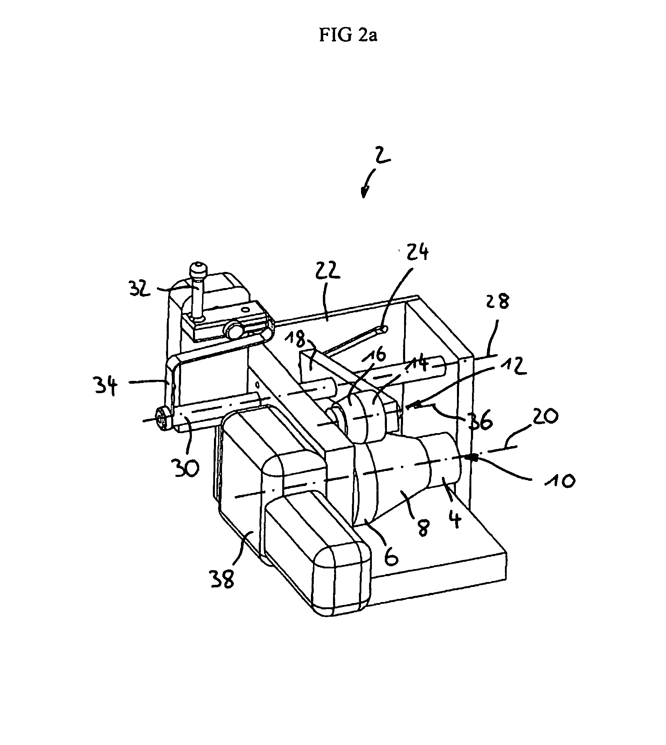

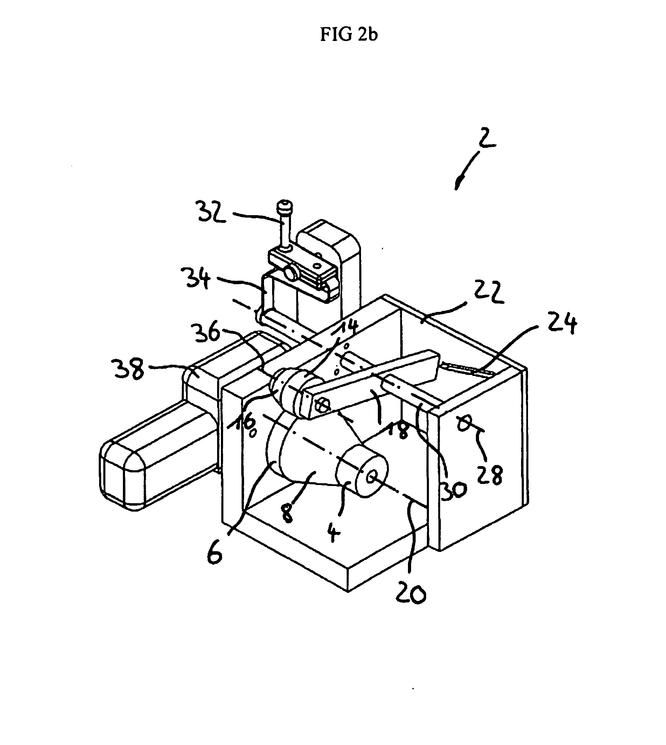

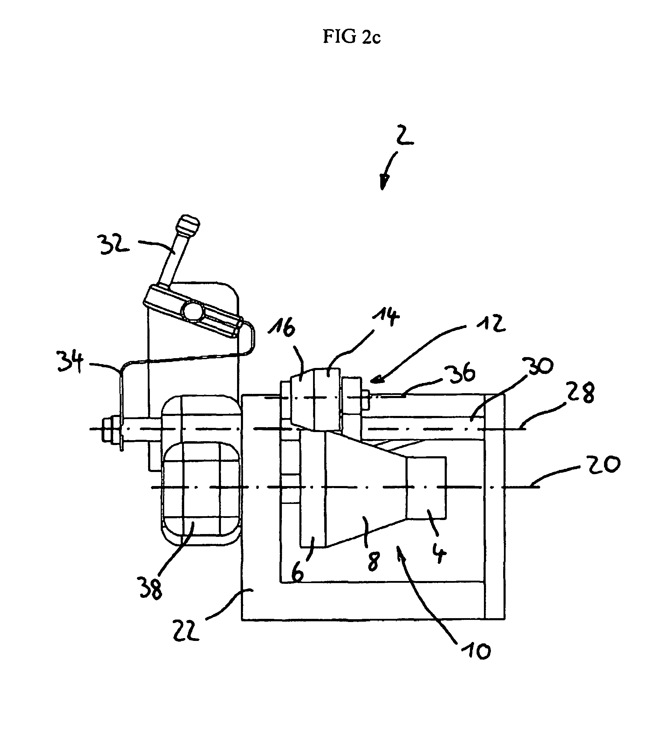

Die zweite Schaltposition kann den Fig. 2a-2c entnommen werden. Dort ist das der Abtriebsanordnung 12 entgegengesetzte Ende des Hebels 18 an dem äußersten Punkt der Leitkurve 24 bewegt, so dass eine Längsachse 36 der Abtriebsanordnung 12 weiter von der Längsachse 20 der Antriebsanordnung 10 beabstandet ist. Das dritte Arbeitsrad 14 steht nun mit dem zweiten Arbeitsrad 6 im Eingriff.

Es sei an dieser Stelle darauf hingewiesen, dass bei dem erfindungsgemäßen Schaltgetriebe 2 die Antriebsanordnung 10 und die Abtriebsanordnung 12 dazu eingerichtet sind, das Drehmoment für Antriebszwecke nur über die Arbeitsräder zu übertragen.

Das erste Schaltrad 8 ist bevorzugt als ein Kegelzahnrad ausgeführt, wohingegen das zweite Schaltrad 16 als ein Kegelzahnrad ausgeführt sein könnte, bei relativ geringen zu übertragenden Drehmomenten jedoch auch als ein Wälzkörper aus einem elastischen Material.

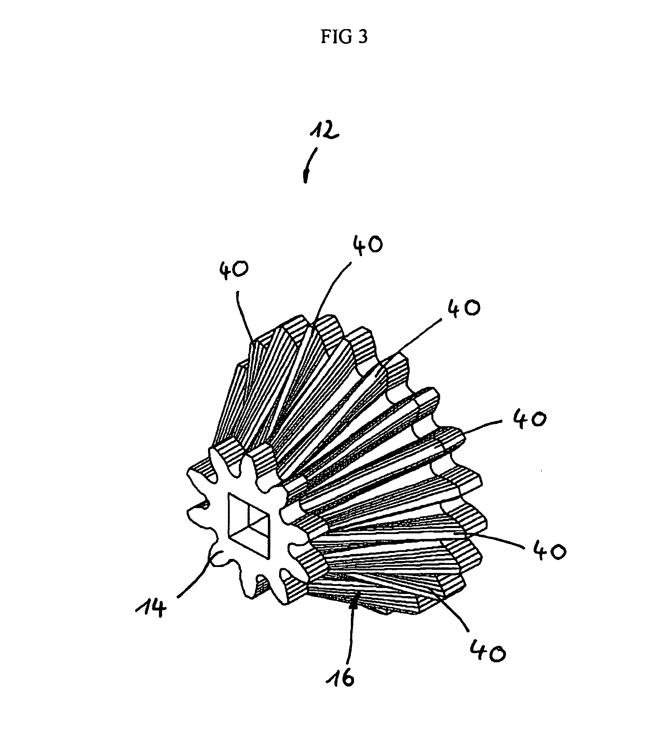

In Fig. 3 wird die Kombination aus drittem Arbeitsrad 14 und zweitem Schaltrad 16 gezeigt, wobei das dritte Arbeitsrad 14 als ein Stirnzahnrad ausgeführt ist, welches exemplarisch 10 Zähne aufweist. Das zweite Schaltrad 16 weist auf der zu dem dritten Arbeitsrad gewandten Seite ebenfalls 10 Zähne auf, während die entgegengesetzte Seite des zweiten Schaltrads 16 insgesamt 20 Zähne aufweist. Es ist in dieser Darstellung zu erkennen, dass jeder zweite Zahn von der vom dritten Arbeitsrad 14 entgegengesetzten Seite zu dem dritten Arbeitsrad 14 hin im Grund des zweiten Schaltrads 16 verläuft, das heißt die Zahnhöhe jedes derartigen Differenzzahns 40 geht gegen Null. Diese Differenzzähne 40, deren Zahnhöhe gegen Null läuft, können elastisch gelagert sein, so dass sie auf dem Grund des zweiten Schaltrads 16 hin- und herbewegt werden können. Dies ist während des Schaltvorgangs, das heißt vom Übergang einer ersten Schaltposition aus den Fig. 1a-1c zu einer zweiten Schaltposition aus den Fig. 2a-2c sehr vorteilhaft, da sich die Übersetzungsverhältnisse während des Schaltvorgangs ändern und aufgrund der elastischen Aufhängung Schaltkonflikte bzw. Eingriffskonflikte elegant eliminieren lassen.

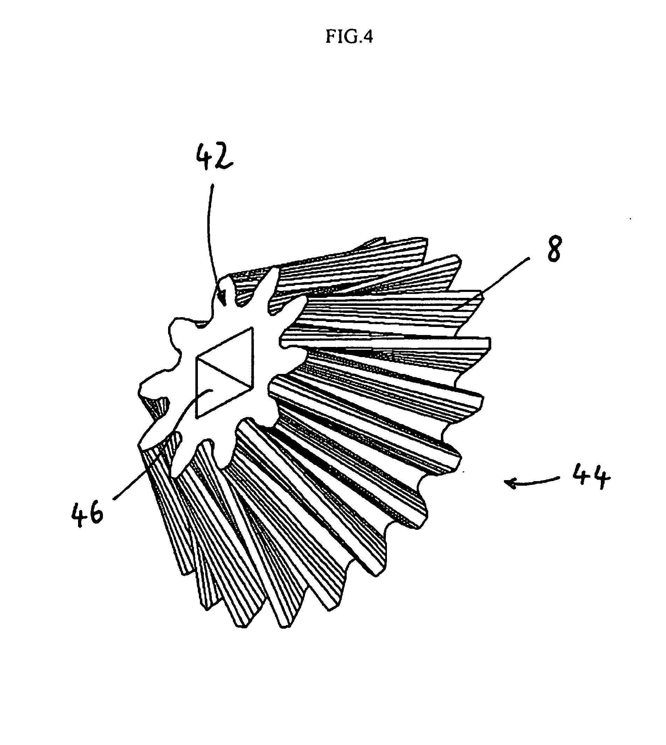

In Fig. 4 wird ein erstes Schaltrad 8 gezeigt, das analog zu dem vorangehend gezeigten zweiten Schaltrad 16 eine erste Seite 42 und eine zweite Seite 44 aufweist, wobei die erste Seite eine Zähnezahl von 10 aufweist und die zweite Seite 40 eine Zähnezahl von 20.

Sämtliche Getriebekomponenten, das heißt erstes Arbeitsrad 4, zweites Arbeitsrad 6, drittes Arbeitsrad 14, erstes Schaltrad 8 und zweites Schaltrad 16 können über einen profilierte Öffnungsquerschnitt 46 verfügen, der nicht kreisrund ausgestaltet ist, so dass sich diese Getriebekomponenten leicht auf eine Antriebswelle oder eine Abtriebswelle aufsetzen lassen und durch die formschlüssige Verbindung ein Drehmoment übertragen können. Hierbei könnte sich zur Kompensation der räumlich unstetigen Lage der Abtriebsanordnung ein Wellengelenk eingesetzt werden.

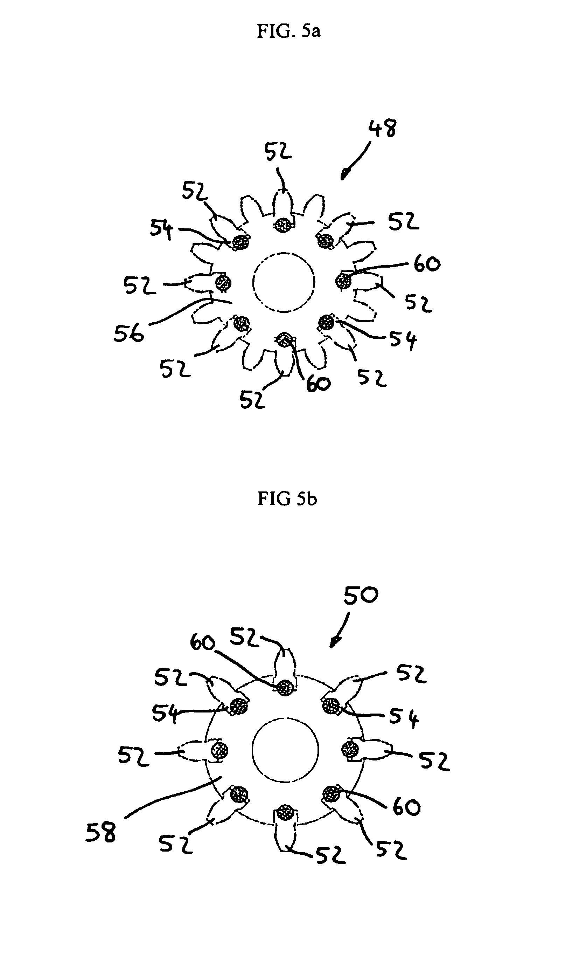

Fig. 5a und 5b zeigen schematisch zwei Zahnräder 48 und 50, die jeweils eine Reihe von beweglich gelagerten Zähnen 52 aufweisen. Dies kann jeweils etwa durch eine Zahnbasis 54 realisiert werden, die in einer entsprechend geformten Ausnehmung eines Zahnradkörpers 56 bzw. 58 formschlüssig sitzt und durch ein Federelement 60 radial nach außen gedrückt wird. Das Federelement 60 könnte etwa durch einen Moosgummieinsatz realisiert sein.

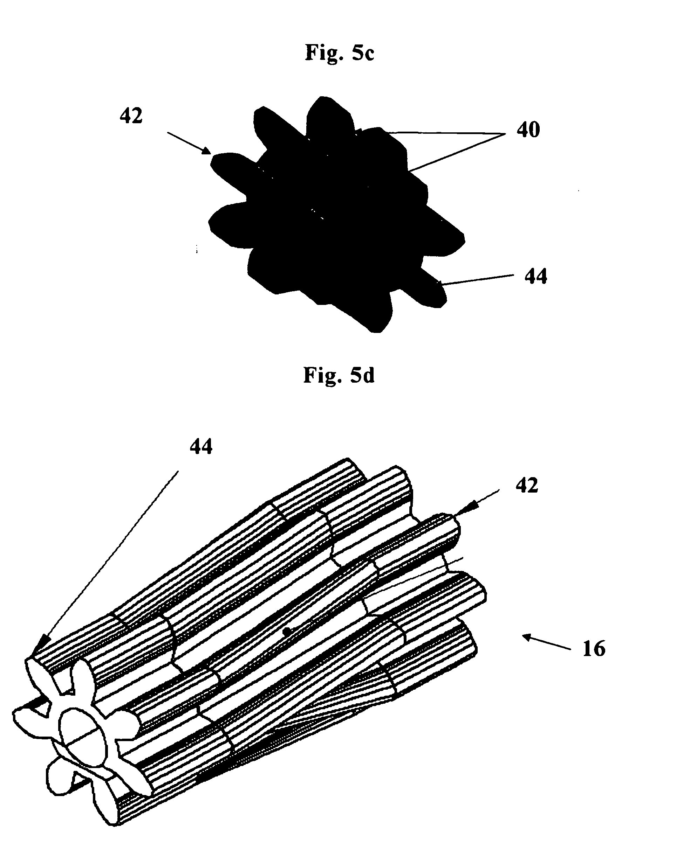

Fig. 5c und 5d zeigen eine alternative Ausführungsform des zweiten Schaltrads 16 aus zwei Perspektiven. Die erste Seite 42 weist dabei eine Zähnezahl von 9 Zähnen und die zweite Seite 44 eine Zähnezahl von 7 Zähnen auf. Zwei Zähne sind als Differenzzähne 40 ausgeführt.

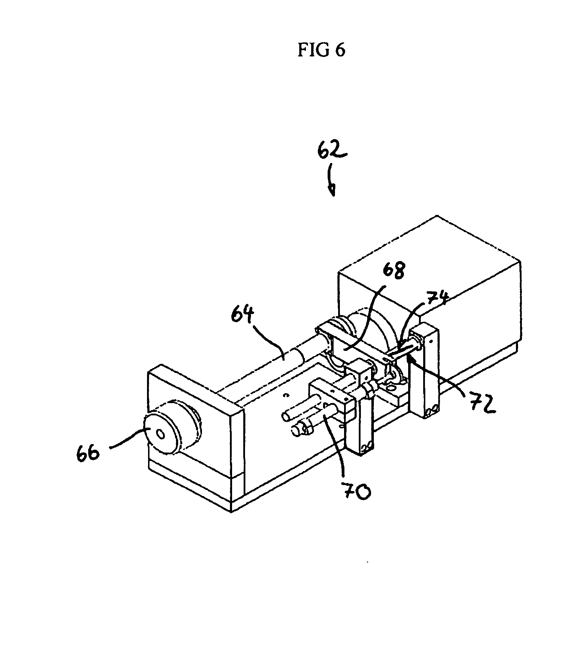

Schließlich zeigt Fig. 6 eine Abwandlung des erfindungsgemäßen Schaltgetriebes 62, bei dem eine Antriebsanordnung 10 und eine Abtriebsanordnung 12 miteinander in Eingriff stehen, wobei die Abtriebsanordnung 12 über ein Wellengelenk 64 mit einem Abtrieb 66 verbunden ist. Die Abtriebsanordnung 12 ist an einem Hebel 68 drehbar gelagert, der über einen Aktuator 70 entlang einer Achse 72 verschiebbar gehaltert ist. Die Achse 72 weist zum Bereitstellen eines definierten Abstands zwischen der Abtriebsanordnung 12 und der Antriebsanordnung 10 eine Leitkurve 74 auf, durch die der Hebel 68 bei Relativbewegung zu der Achse 72 ausgelenkt wird. Durch diesen Aufbau wird das erfindungsgemäße Schaltgetriebe 62 sehr kompakt.

An dieser Stelle sei darauf hingewiesen, dass die Verwendung eines erfindungsgemäßen Schaltgetriebes nicht auf verschiedene technische Gebiete beschränkt ist. Vielmehr kann in vielen Anwendungsgebieten, wie etwa in Werkzeugmaschinen und Fahrzeugen, ein erfindungsgemäßes Schaltgetriebe eingesetzt werden. Ferner ist das erfindungsgemäße Schaltgetriebe nicht auf lediglich zwei Schaltstufen beschränkt, durch Anpassen der Anzahl der Arbeitsräder und der dazwischen liegenden Schalträder in der

Antriebsanordnung können auch mehr Schaltstufen realisiert werden.

### BEZUGSZEICHENLISTE

- 2: Schaltgetriebe
- 4: erstes Arbeitsrad
- 6: zweites Arbeitsrad
- 8: erstes Schaltrad
- 10: Antriebsanordnung
- 12: Abtriebsanordnung
- 14: drittes Arbeitsrad
- 16: zweites Schaltrad
- 18: Hebel
- 20: Längsachse
- 22: Rahmen
- 24: Leitkurve (Führungsmittel)
- 26: Lagerpunkt
- 28: Längsachse
- 30: Achse
- 32: Schalthebel
- 34: Feder
- 36: Längsachse
- 38: Antriebseinheit
- 40: Differenzzahn
- 42: erste Seite
- 44: zweite Seite
- 46: Öffnungsquerschnitt
- 48: Zahnrad
- 50: Zahnrad
- 52: bewegbarer Zahn
- 54: Zahnbasis
- 56: Zahnkörper
- 58: Zahnkörper
- 60: Federeinsatz
- 62: Schaltgetriebe
- 64: Wellengelenk
- 66: Abtrieb
- 68: Hebel
- 70: Aktuator
- 72: Achse
- 74: Leitkurve

## Patentansprüche

1. Schaltgetriebe (2, 62), aufweisend
- mindestens eine Antriebsanordnung (10) mit mindestens einem ersten Arbeitsrad (4), mindestens einem von dem ersten Arbeitsrad (4) beabstandeten zweiten Arbeitsrad (6) und mindestens einem bündig zwischen dem ersten Arbeitsrad (4) und dem zweiten Arbeitsrad (6) angeordneten ersten Schaltrad (8), wobei das erste Arbeitsrad (4), das zweite Arbeitsrad (6) und das erste Schaltrad (8) konzentrisch zu einer gemeinsamen Längsachse (20) angeordnet sind; **gekennzeichnet durch**
- mindestens eine Abtriebsanordnung (12) mit einer zu der Längsachse (20) der Antriebsanordnung (10) parallel angeordneten Längsachse (36) und mit mindestens einem mit dem ersten Arbeitsrad (4) und dem zweiten Arbeitsrad (6) in Eingriff bringbaren dritten Arbeitsrad (14); und
- eine mit der Abtriebsanordnung (12) verbundene Schaltvorrichtung zum Bewegen der Abtriebsanordnung (12) relativ zu der Antriebsanordnung (10);
wobei das erste Schaltrad (8) als Kegelzahnrad ausgeführt ist, dessen zu dem ersten Arbeitsrad (4) gerichtete erste Seite eine erste Zahnzahl aufweist und dessen zu dem zweiten Arbeitsrad gerichtete zweite Seite eine um eine Zahnzahldifferenz höhere zweite Zahnzahl aufweist, wobei eine der Zahnzahldifferenz entsprechende Anzahl von Differenzzähnen von der zweiten Seite des ersten Schaltrads (8) aus zu der ersten Seite des ersten Schaltrads (8) gerichtet in den Grund des ersten Schaltrads (8) auslaufen;
wobei die Schaltvorrichtung dazu eingerichtet ist, die Abtriebsanordnung (12) parallel zu der Längsachse (20) der Antriebsanordnung (10) in mindestens eine erste Schaltposition und eine zweite Schaltposition zu verschieben, wobei das dritte Arbeitsrad (14) in der ersten Schaltposition mit dem ersten Arbeitsrad (4) im Eingriff steht und in der zweiten Schaltposition mit dem zweiten Arbeitsrad (6) im Eingriff steht.

2. Schaltgetriebe (2, 62) nach Anspruch 1, wobei jeder zweite Zahn auf der zweiten Seite des ersten Schaltrads ein Differenzzahn ist.

3. Schaltgetriebe (2, 62) nach Anspruch 1 oder 2, ferner aufweisend ein mit dem ersten Schaltrad (8) in Eingriff bringbares zweites Schaltrad (16), das bündig an dem dritten Arbeitsrad (14) angeordnet ist.

4. Schaltgetriebe (2, 62) nach Anspruch 3, wobei das zweite Schaltrad (16) als Kegelzahnrad ausgeführt ist.

5. Schaltgetriebe (2, 62) nach Anspruch 4, wobei mindestens ein Zahn des zweiten Schaltrads (16) elastisch gelagert ist.

6. Schaltgetriebe (2, 62) nach Anspruch 3, wobei das zweite Schaltrad (16) als konischer Wälzkörper aus einem elastischen Material ausgeführt ist, wobei bevorzugt das elastische Material des zweiten Schaltrads (16) ein offenzelliger Schaumstoff ist.

7. Schaltgetriebe (2, 62) nach Anspruch 4, wobei mindestens ein Zahn, bevorzugt ein oder zwei Zähne, des zweiten Schaltrades (16) ein Differenzzahn ist.

8. Schaltgetriebe (2, 62) nach einem der vorhergehenden Ansprüche, ferner aufweisend einen Rahmen (22),
wobei die mindestens eine Antriebsanordnung (10) antreibbar an dem Rahmen (22) gelagert ist;
wobei die mindestens eine Abtriebsanordnung (12) drehbar und verschiebbar an dem Rahmen (22) gelagert ist; und
wobei die Schaltvorrichtung an dem Rahmen (22) angeordnet ist.

9. Schaltgetriebe (2, 62) nach Anspruch 8, wobei die Abtriebsanordnung (12) an einem ersten Ende eines parallel zu der Längsachse (20) der Antriebsanordnung (10) verschiebbar an dem Rahmen (22) geführten Hebels (18, 68) drehbar gelagert ist.

10. Schaltgetriebe (2, 62) nach Anspruch 9, wobei der Hebel (18, 68) in einer relativ zu dem Rahmen (22) fest angeordneten Führungsvorrichtung geführt ist.

11. Schaltgetriebe (2, 62) nach Anspruch 10, wobei die Führungsvorrichtung als eine in dem Rahmen angeordnete Leitkurve (24) ausgeführt ist und der Hebel (18, 68) an einem zwischen dem ersten Ende und dem zweiten Ende des Hebels (18, 68) angeordneter Lagerpunkt (26) verschiebbar an einer an dem Rahmen (22) angeordneten Achse (30) gelagert ist, wobei die Leitkurve (24) dazu eingerichtet ist, zwischen der Abtriebsvorrichtung (12) und der Antriebsvorrichtung (10) einen vordefinierten Abstand zum Herstellen eines idealen Eingriffs zwischen dem dritten Arbeitsrad (14) und dem ersten Arbeitsrad (4) oder zweiten Arbeitsrad (6) zu gewährleisten.

12. Schaltgetriebe (2, 62) nach Anspruch 10, wobei die Führungsvorrichtung als eine Leitkurve (74) in einer Achse (72) ausgeführt ist, an der der Hebel (68) drehbar gelagert ist.

13. Schaltgetriebe (2, 62) nach einem der Ansprüche 8 bis 12, wobei die Schaltvorrichtung einen Federmechanismus mit Sperrschaltung aufweist, der dazu eingerichtet ist, die Abtriebsvorrichtung (12) federkraftgestützt von der ersten Schaltposition in die zweite Schaltposition zu bringen.

14. Schaltgetriebe (2, 62) nach einem der vorhergehenden Ansprüche, wobei die mindestens eine Antriebsvorrichtung (10) eine Antriebswelle aufweist, die einen nicht kreisrunden Querschnitt aufweist, auf dem das erste Arbeitsrad (4), das zweite Arbeitsrad (6) und das erste Schaltrad (8) mit einem korrespondierend geformten Öffnungsquerschnitt formschlüssig angeordnet sind.

15. Schaltgetriebe (2, 62) nach einem der vorhergehenden Ansprüche, wobei die mindestens eine Abtriebsvorrichtung (12) eine Abtriebswelle aufweist, die einen nicht kreisrunden Querschnitt aufweist, auf dem das dritte Arbeitsrad (14) mit einem korrespondierend geformten Öffnungsquerschnitt formschlüssig angeordnet ist.

## Claims

1. Manual transmission (2, 62) having
- at least one drive assembly (10) comprising at least a first working wheel (4), at least a second working wheel (6) spaced at a distance from the first working wheel (4), and at least a first control gear (8) arranged flush between the first working wheel (4) and the second working wheel (6), wherein the first working wheel (4), the second working wheel (6), and the first control gear (8) are arranged concentrically to a common longitudinal axis (20);
**characterized by**
- at least one output assembly (12) having a longitudinal axis (36) arranged parallel to the longitudinal axis (20) of the drive arrangement (10), and having at least one third working wheel (14) that can be brought into engagement with the first working wheel (4) and the second working wheel (6); and
- a shifting device connected to the output arrangement (12) for moving the output arrangement (12) relative to the drive arrangement (10);
wherein the first control gear (8) is designed as a bevel gear, the first side of thereof, directed to the first working wheel (4), has a first number of teeth and the second side thereof, directed to the second working wheel, has a second number of teeth that is higher by a tooth number difference, wherein a number of differential teeth corresponding to the tooth number difference, directed from the second side of the first control gear (8) to the first side of the first control gear (8), runs out into the base of the first control gear (8);
wherein the shifting device is equipped in order to displace the output arrangement (12) parallel to the longitudinal axis (20) of the drive arrangement (10) into at least one first shift position and one second shift position, wherein the third working wheel (14) engages with the first working wheel (4) in the first shift position and engages with the second working wheel (6) in the second shift position.

2. Manual transmission (2, 62) according to Claim 1, wherein every other tooth on the second side of the first control gear is a differential tooth.

3. Manual transmission (2, 62) according to Claim 1 or 2, having additionally a second control gear (16), which can be brought into engagement with the first control gear (8), and is arranged flush on the third working wheel (14).

4. Manual transmission (2, 62) according to Claim 3, wherein the second control gear (16) is designed as a bevel gear.

5. Manual transmission (2, 62) according to Claim 4, wherein at least one tooth of the second control gear (16) is elastically mounted.

6. Manual transmission (2, 62) according to Claim 3, wherein the second control gear (16) is designed as a tapering roller body made of an elastic material, wherein the elastic material of the second control gear (16) is preferably an open-cell foam.

7. Manual transmission (2, 62) according to Claim 4, wherein at least one tooth, preferably one or two teeth, of the second control gear (16) is a differential tooth.

8. Manual transmission (2, 62) according to one of the preceding claims, further having a frame (22),
wherein the at least one drive arrangement (10) is driveably mounted on the frame (22); wherein the at least one output arrangement (12) is rotatably and displaceably mounted on the frame (22); and
wherein the shifting device is arranged on the frame (22).

9. Manual transmission (2, 62) according to Claim 8, wherein the output arrangement (12) is rotatably mounted on a first end of a lever (18, 68) guided displaceably on the frame (22) parallel to the longitudinal axis (20) of the drive arrangement (10).

10. Manual transmission (2, 62) according to Claim 9, wherein the lever (18, 68) is guided in a guide device fixedly mounted relative to the frame (22).

11. Manual transmission (2, 62) according to Claim 10, wherein the guide device is designed as a guide curve (24) arranged on the frame, and the lever (18, 68) is mounted on a bearing point (26) arranged between the first end and the second end of the lever (18, 68) displaceably on a shaft (30) arranged on the frame (22), wherein the guide curve (24) is equipped to guarantee a predefined distance between the output arrangement (12) and the drive arrangement (10) to produce an ideal engagement between the third working wheel (14) and the first working wheel (4) or second working wheel (6).

12. Manual transmission (2, 62) according to Claim 10, wherein the guide device is designed as a guide curve (74) in a shaft (72) on which the lever (68) is rotatably mounted.

13. Manual transmission (2, 62) according to one of Claims 8 to 12, wherein the shifting device has a spring mechanism with a lock-out circuit, and which is equipped to bring the output device (12) spring-supported from the first shift position into the second shift position.

14. Manual transmission (2, 62) according to one of the preceding claims, wherein the at least one drive arrangement (10) has a drive shaft, which has a non-circular cross section on which the first working wheel (4), the second working wheel (6), and the first control gear (8) are arranged in a positive locking way with a correspondingly shaped opening cross section.

15. Manual transmission (2, 62) according to one of the preceding claims, wherein the at least one output arrangement (12) has a drive shaft, which has a non-circular cross section, on which the third working wheel (14) is arranged in a positive locking way with a correspondingly shaped opening cross section.

## Revendications

1. Boîte de vitesses (2, 62), comprenant
- au moins un ensemble d'entraînement (10) avec au moins une première roue de travail (4), au moins une deuxième roue de travail (6) espacée de la première roue de travail (4) et au moins une première roue de changement de vitesse (8) disposée jointive entre la première roue de travail (4) et la deuxième roue de travail (6), la première roue de travail (4), la deuxième roue de travail (6) et la première roue de changement de vitesse (8) étant disposées concentriquement à un axe longitudinal commun (20) ;
**caractérisée par**
- au moins un ensemble de sortie (12) avec un axe longitudinal (36) disposé parallèlement à l'axe longitudinal (20) de l'ensemble d'entraînement (10) et avec au moins une troisième roue de travail (14) pouvant être mise en prise avec la première roue de travail (4) et la deuxième roue de travail (6) ; et
- un dispositif de changement de vitesse relié à l'ensemble de sortie (12) pour déplacer l'ensemble de sortie (12) par rapport à l'ensemble d'entraînement (10) ;
la première roue de changement de vitesse (8) étant réalisée sous la forme d'une roue dentée conique dont le premier côté dirigé vers la première roue de travail (4) présente un premier nombre de dents et dont le deuxième côté dirigé vers la deuxième roue de travail présente un deuxième nombre de dents supérieur d'une différence de nombre de dents, un nombre de dents de différence, correspondant à la différence de nombre de dents, dirigées du deuxième côté de la première roue de changement de vitesse (8) vers le premier côté de la première roue de changement de vitesse (8) aboutissant dans le fond de la première roue de changement de vitesse (8) ;
le dispositif de changement de vitesse étant conçu pour déplacer l'ensemble de sortie (12) parallèlement à l'axe longitudinal (20) de l'ensemble d'entraînement (10) vers au moins une première position de changement de vitesse et vers une deuxième position de changement de vitesse, la troisième roue de travail (14) étant en prise avec la première roue de travail (4) dans la première position de changement de vitesse et en prise avec la deuxième roue de travail (6) dans la deuxième position de changement de vitesse.

2. Boîte de vitesses (2, 62) selon la revendication 1, dans laquelle une dent sur deux du deuxième côté de la première roue de changement de vitesse est une dent de différence.

3. Boîte de vitesses (2, 62) selon la revendication 1 ou 2, comprenant en outre une deuxième roue de changement de vitesse (16) qui peut être mise en prise avec la première roue de changement de vitesse (8) et qui est disposée jointive avec la troisième roue de travail (14).

4. Boîte de vitesses (2, 62) selon la revendication 3, dans laquelle la deuxième roue de changement de vitesse (16) est réalisée sous la forme d'une roue dentée conique.

5. Boîte de vitesses (2, 62) selon la revendication 4, dans laquelle au moins une dent de la deuxième roue de changement de vitesse (16) est montée élastiquement.

6. Boîte de vitesses (2, 62) selon la revendication 3, dans laquelle la deuxième roue de changement de vitesse (16) est réalisée sous la forme d'un corps de roulement conique composé d'un matériau élastique, le matériau élastique de la deuxième roue de changement de vitesse (16) étant de préférence une mousse à pores ouverts.

7. Boîte de vitesses (2, 62) selon la revendication 4, dans laquelle au moins une dent, de préférence une ou deux dents, de la deuxième roue de changement de vitesse (16) est une dent de différence.

8. Boîte de vitesses (2, 62) selon l'une des revendications précédentes, présentant en outre un bâti (22) et
dans laquelle ledit au moins un ensemble d'entraînement (10) est monté entraînable sur le bâti (22) ;
dans laquelle ledit au moins un ensemble de sortie (12) est monté tournant et coulissant sur le bâti (22) ; et
dans laquelle le dispositif de changement de vitesse est disposé sur le bâti (22).

9. Boîte de vitesses (2, 62) selon la revendication 8, dans laquelle l'ensemble de sortie (12) est monté tournant sur une première extrémité d'un levier (18, 68) guidé coulissant sur le bâti (22) parallèlement à l'axe longitudinal (20) de l'ensemble d'entraînement (10).

10. Boîte de vitesses (2, 62) selon la revendication 9, dans laquelle le levier (18, 68) est guidé dans un dispositif de guidage disposé fixement par rapport au bâti (22).

11. Boîte de vitesses (2, 62) selon la revendication 10, dans laquelle le dispositif de guidage est réalisé sous la forme d'une courbe de guidage (24) disposée dans le bâti, et le levier (18, 68) est monté coulissant sur un axe (30) disposé sur le bâti (22) en un point d'appui (26) disposé entre la première extrémité et la deuxième extrémité du levier (18, 68), la courbe de guidage (24) étant conçue pour garantir un écart prédéfini entre l'ensemble de sortie (12) et l'ensemble d'entraînement (10) afin de réaliser un engrènement idéal entre la troisième roue de travail (14) et la première roue de travail (4) ou la deuxième roue de travail (6).

12. Boîte de vitesses (2, 62) selon la revendication 10, dans laquelle le dispositif de guidage est réalisé sous la forme d'une courbe de guidage (74) dans un axe (72) sur lequel le levier (68) est monté tournant.

13. Boîte de vitesses (2, 62) selon l'une des revendications 8 à 12, dans laquelle le dispositif de changement de vitesse présente un mécanisme à ressort avec circuit de blocage qui est conçu pour amener, par la force d'un ressort, l'ensemble de sortie (12) de la première position de changement de vitesse à la deuxième position de changement de vitesse.

14. Boîte de vitesses (2, 62) selon l'une des revendications précédentes, dans laquelle ledit au moins un ensemble d'entraînement (10) présente un arbre d'entraînement qui possède une section transversale non circulaire sur laquelle la première roue de travail (4), la deuxième roue de travail (6) et la première roue de changement de vitesse (8) dotées d'une section transversale d'ouverture de forme correspondante sont disposées par complémentarité de formes.

15. Boîte de vitesses (2, 62) selon l'une des revendications précédentes, dans laquelle ledit au moins un ensemble de sortie (12) présente un arbre de sortie qui possède une section transversale non circulaire, sur lequel la troisième roue de travail (14) dotée d'une section transversale d'ouverture de forme correspondante est disposée par complémentarité de formes.
